# EUROPEAN PATENT APPLICATION

(11) **EP 4 675 243 A1**
(43) Date of publication of application: **07.01.2026**
(21) Application number: 24306130.6
(22) Date of filing: 05.07.2024
(51) Int. Cl.: G01K 1/022, G01K 1/02, G01K 3/00, G01K 3/04, G01K 7/01, G01R 31/00

(54) **TEMPERATURE PROFILING CIRCUIT AND METHOD FOR DETERMINING A TEMPERATURE PROFILE**

(71) Applicant: NXP USA, Inc., Austin TX 78735 (US)
(72) Inventor: Ryabchenkov,, Sergey Sergeevich, 31023 cedex 1 Toulouse (FR); Kandah,, Ibrahim Shihadeh, 5656 AG Eindhoven (NL); Storez,, Antoine, 31023 cedex 1 Toulouse (FR)
(74) Representative: Schmütz, Christian Klaus Johannes

(57) **Abstract**

A temperature profiling circuit (TPC) comprising: a voltage supply terminal configured to provide a supply voltage; and a data collection circuit comprising: a reference transistor and a plurality of data collection transistors. Each data collection transistor is associated with a different temperature sub-range. The TPC also includes a control circuit configured to: receive a temperature signal indicative of a present temperature; identify an active data collection transistor that is associated with the present temperature sub-range; provide a reference voltage to the gate of the active data collection transistor, such that its gate-source voltage is greater than a predetermined voltage; provide the supply voltage to the gates of all other data collection transistors and the reference transistor, such that their gate-source voltages are not greater than the predetermined voltage. A temperature profile, indicative of the amount of time the TPC has spent within each temperature sub-range, is determinable by comparing one or more characteristics of each of the data collection transistors to those of the reference transistor.

## Description

### Field

The present disclosure relates to a temperature profiling circuit. More specifically, the present disclosure relates to a temperature profiling circuit configured to operate within a temperature range, wherein the temperature range is divided into a plurality of temperature sub-ranges.

### Summary

According to a first aspect of the present disclosure there is provided a temperature profiling circuit configured to operate within a temperature range, comprising:
a voltage supply terminal configured to provide a supply voltage;
a data collection circuit comprising:
   a reference transistor, comprising a gate terminal and a channel between a source terminal and a drain terminal, wherein the channel is connected between the voltage supply terminal and a measurement node;
   a plurality of data collection transistors, each comprising a gate terminal and a channel between a source terminal and a drain terminal, wherein the channel of each reference transistor is connected between the voltage supply terminal and a measurement node, wherein: each data collection transistor of the plurality of data collection transistors is associated with a different temperature sub-range of the temperature range; and
a control circuit, configured to, during a data collection mode of the temperature profiling circuit:
   receive a temperature signal which is indicative of a present temperature;
   identify an active data collection transistor as the data collection transistor that is associated with the temperature sub-range that includes the present temperature;
   provide a reference voltage to the gate terminal of the active data collection transistor, such that a potential difference between the gate terminal and the source terminal of the active data collection transistor is greater than a predetermined voltage;
   provide the supply voltage to the gate terminals of all data collection transistors apart from the active data collection transistor such that a potential difference between the gate terminal and the source terminal of each of the other data collection transistors is not greater than the predetermined voltage; and
   provide the supply voltage to the gate terminal of the reference transistor such that a potential difference between the gate terminal and the source terminal of the reference transistor is not greater than the predetermined voltage;
such that a temperature profile, which is indicative of the amount of time the temperature profiling circuit has spent within each temperature sub-range, is determinable in a temperature profile determining mode by comparing one or more characteristics of each of the plurality of the data collection transistors to those of the reference transistor.

In one or more embodiments, the temperature profiling circuit further comprises a reference terminal configured to provide the reference voltage. During the data collection mode of the temperature profiling circuit, the control circuit may be configured to:
connect the gate terminal of the active data collection transistor to the reference terminal,
disconnect the gate terminals of all data collection transistors apart from the active data collection transistor from the reference terminal, and
disconnect the gate terminal of the reference transistor from the reference terminal.

In one or more embodiments the reference transistor is identical to each of the data collection transistors.

In one or more embodiments the reference transistor is a MOSFET, and the data collection transistors are MOSFETs.

In one or more embodiments the reference transistor is a P-type MOSFET, and the data collection transistors are P-type MOSFETs.

In one or more embodiments, the temperature profiling circuit further comprises a temperature range detector configured to provide the temperature signal to the control circuit.

In one or more embodiments, the data collection transistors degrade at a predictable rate while their gate terminals are connected to the reference terminal.

In one or more embodiments, the temperature profiling circuit further comprises a measurement-switch connected between the measurement node and a measurement pin.

The control circuit may be configured to, during the data collection mode of the temperature profiling circuit: open the measurement-switch.

The control circuit may be configured to, during the temperature profile determining mode of the temperature profiling circuit:
close the measurement-switch;
measure the one or more characteristics of the reference transistor by connecting the gate terminal of the reference transistor to the measurement node, wherein: when the gate terminal of the reference transistor is connected to the measurement node, the gate terminals of each of the data collection transistors are disconnected from the measurement node;
measure the one or more characteristics of each data collection transistor by connecting the gate terminal of each data collection transistor to the measurement node, wherein: when the gate terminal of each data collection transistor is connected to the measurement node, the gate terminal of the reference transistor and the gate terminals of each other data collection transistor are disconnected from the measurement node; and
compare the one or more characteristics of each of the plurality of the data collection transistors to those of the reference transistor in order to determine the temperature profile.

In one or more embodiments, the one or more characteristics comprises the threshold voltage.

In one or more embodiments:
during the temperature profiling mode of the temperature profiling circuit, the control circuit is further configured to:
determine a change of threshold voltage value for each data collection transistor by determining the difference between the determined threshold voltage of each of the plurality of data collection transistors and that of the reference transistor, and
calculate a time-spent value for each data collection transistor from its change of threshold voltage value by comparing the change of threshold voltage value to a data set. In one or more embodiments:
   the data set comprises data representative of the change of threshold voltage per unit time in which a transistor spends with its gate connected to the reference terminal, and
   the time-spent value for each data collection transistor is indicative of the total amount of time in which the temperature profiling circuit spent within the temperature sub-range associated with the data collection transistor, during the data collection mode.

In one or more embodiments, during the temperature profiling mode of the temperature profiling circuit, the control circuit is further configured to compile each time-spent value into the temperature profile.

In one or more embodiments, the data set comprises data representative of the change of threshold voltage per unit time in which a transistor spends with its gate connected to the reference terminal, for each temperature sub-range.

In one or more embodiments, the reference voltage is less positive than the supply voltage.

In one or more embodiments, the supply voltage is positive, and the reference voltage is zero Volts.

According to a second aspect of the present disclosure there is provided a method for determining a temperature profile of a temperature profiling circuit, within a temperature range, wherein the temperature profiling circuit comprises:
a voltage supply terminal configured to provide a supply voltage;
a reference terminal configured to provide a reference voltage;
a data collection circuit comprising:
   a reference transistor comprising a gate terminal and a channel between a source terminal and a drain terminal, wherein the channel is connected between the voltage supply terminal and a measurement node;
   a plurality of data collection transistors, each comprising a gate terminal and a channel between a source terminal and a drain terminal, wherein the channel is connected between the voltage supply terminal and a measurement node;
the method comprising:
associating each data collection transistor of the plurality of data collection transistors with a different temperature sub-range of the temperature range;
during a data collection mode of the temperature profiling circuit:
   receiving a temperature signal which is indicative of a present temperature;
   identifying an active data collection transistor as the data collection transistor that is associated with the temperature sub-range that includes the present temperature;
   connecting the gate terminal of the active data collection transistor to the reference terminal,
   disconnecting the gate terminals of all data collection transistors apart from the active data collection transistor from the reference terminal, and
   disconnecting the gate terminal of the reference transistor from the reference terminal; and
during a temperature profile determining mode:
   comparing one or more characteristics of each of the plurality of the data collection transistors to those of the reference transistor to determine a temperature profile, which is indicative of the amount of time the temperature profiling circuit has spent within each temperature sub-range.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows a temperature profiling circuit according to an embodiment of the present disclosure;
Figure 2 shows an example data collection circuit according to an embodiment of the present disclosure;
Figure 3 shows the configuration of a reference transistor during a temperature profiling mode;
Figure 4 shows the configuration of a data collection transistor during a temperature profiling mode;
Figure 5 shows an example temperature profile according to an embodiment of the invention;
Figure 6 shows an example plot produced from a data set; and
Figure 7 shows an example temperature range detector.

### Detailed Description

Automotive integrated circuits are qualified according to mission profiles. These mission profiles are mainly theory based since it is understood that collecting data from the field is complex. Including diagnostic capabilities on a device can allow the manufacturer to understand the operating conditions that the device experiences during its lifetime, until failure. This understanding may also help the manufacturer realise the cause of the failure.

Throughout this disclosure, apparatus is described which is suitable for providing a temperature profile. For example, an operating temperature profile of an automotive integrated circuit during its lifetime. As described above, a temperature profile can provide valuable information for the analysis of unexpected failure modes and / or field quality incidents relating to circuits, helping to understand root causes and potentially to identify future circuit enhancements. Temperature profiles also allow for statistical data collection on device usage to further improve reliability strategies, and the data stored within the temperature profile can be used to optimise reliability plans and therefore the time to market for newer devices. Temperature profiles can also help to protect the manufacturer in the event of a device failure because they can provide evidence of the device being used in a non-intended manner, for example.

One method of tracking the operating temperature of devices in the field would be to use long counters to count the time the device spends within discrete temperature ranges, and to store this count inside a non-volatile memory. The following disclosure describes embodiments which can record the amount of time a device has spent within different temperature ranges without the use of long clock chains and non-volatile memory. In other words, the following disclosure describes embodiments which can indirectly record the amount of time a device has spent within different temperature ranges.

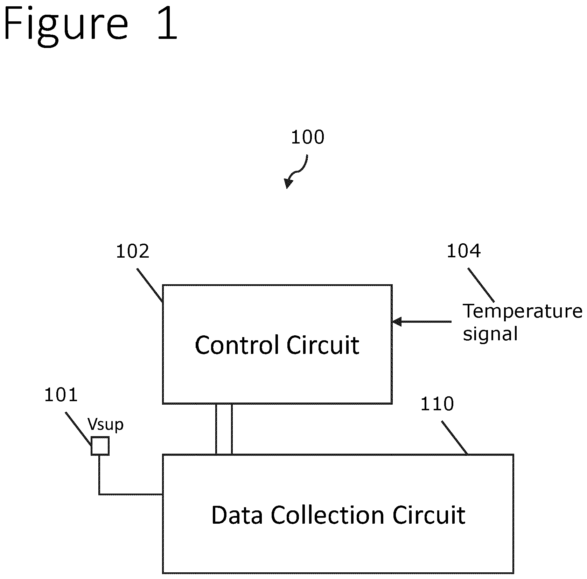

Figure 1 shows a temperature profiling circuit 100 according to an embodiment of the present disclosure. The temperature profiling circuit 100 is configured to operate within a temperature range, wherein the temperature range is divided into a plurality of temperature sub-ranges. For example, the temperature range may be -40°C to 120°C, which is divided into 10°C temperature sub-ranges. The temperature profiling circuit includes a voltage supply terminal 101 (shown as Vsup in the figure) which is configured to provide a supply voltage. A reference voltage is also provided within the data collection circuit 110 (not shown). The reference voltage is different to the supply voltage and may be provided by any suitable means. For example, a reference terminal (which is separate from the voltage supply terminal 101) may provide the reference voltage. In some instances, the reference terminal may be a ground terminal that provides a reference voltage of zero Volts. Alternatively, a voltage supply circuit may be configured to provide one of the two different voltages (the supply voltage or the reference voltage) to the voltage supply terminal 101.

The temperature profiling circuit 100 also includes a data collection circuit 110 and a control circuit 102. As will be discussed in detail below, the data collection circuit 110 collects temperature data, using the supply voltage and the reference voltage, within a data collection mode of the temperature profiling circuit. In this way, a temperature profile, which is indicative of the amount of time the temperature profiling circuit 100 has spent within each temperature sub-range, is determinable in a temperature profile determining mode.

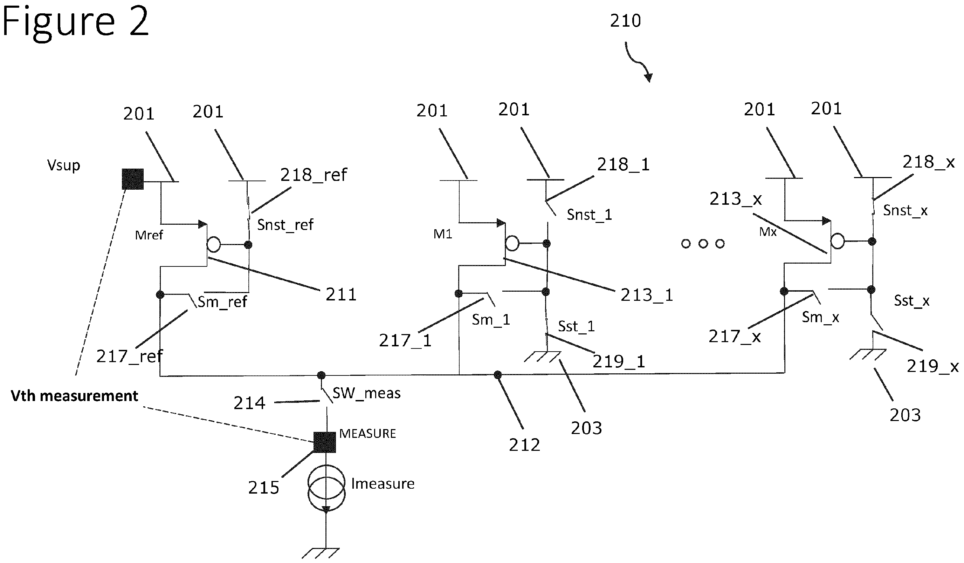

The control circuit 102 receives a temperature signal 104, which is indicative of the present temperature, and uses the temperature signal 104 to control the data collection circuit 110. Specific details of the operations of the data collection circuit 110 and the control circuit 102 will be explained later, with reference to Figure 2.

Figure 2 shows an example data collection circuit 210, according to an embodiment of the present disclosure. Features of Figure 2 that are also illustrated in Figure 1 are given corresponding reference numbers in the 200 series. In this embodiment, the data collection circuit includes a reference terminal 203 configured to provide the reference voltage. Here, the supply voltage that is provided at the voltage supply terminal 201 is a positive voltage, and the reference voltage is zero Volts, although it will be appreciated that other voltages may be used. Therefore, the voltage supply terminal 201 is shown in Figure 2 as a positive voltage rail and the reference terminal 203 is shown as ground.

The data collection circuit 210 includes a reference transistor 211, comprising a gate terminal and a channel between a source terminal and a drain terminal. The channel is connected between the voltage supply terminal 201 and a measurement node 212.

The data collection circuit 210 also includes a plurality of data collection transistors 213_1-213 x, each comprising a gate terminal and a channel between a source terminal and a drain terminal. In Figure 2, a first data collection transistor 213_1 and a last data collection transistor 213_x are shown. It will be appreciated that there may be any number of additional data collection transistors, or no additional data collection transistor. The channel of each of the data collection transistors 213_1-213_x is connected between the voltage supply terminal 201 and the measurement node 212. In the example of Figure 2, the same measurement node 212 is used for both the reference transistor 211 and the data collection transistors 213_1-213_x. However, in other examples, it will be appreciated that one or more of the data collection transistors 213_1-213_x can be connected to different measurement nodes, which may or may not be the same measurement node that the reference transistor 211 is connected to.

Each data collection transistor of the plurality of data collection transistors 213_1-213_x is associated with a different temperature sub-range. That is, each data collection transistor 213_1-213_x is assigned to one of the temperature sub-ranges. In this way, each of the temperature sub-ranges has at least one data collection transistor associated with it, such that the data collection transistors can be selectively biased based on the present temperature, as described in detail below. In this example, the number of data collection transistors 213_1-213_x is equal to the number of temperature sub-ranges, such that no two data collection transistors 213_1-213_x are assigned to the same temperature sub-range. For example, consider a temperature profiling circuit which is configured to operate within the temperature range of 0°C-29°C, wherein the temperature range is divided into three temperature sub-ranges: 0°C-9°C, 10°C-19°C and 20°C-29°C. In this example, the temperature profiling circuit would have three data collection transistors: a first data collection transistor 213_1, a second data collection transistor (not shown in the figure) and a third data collection transistor (which can be considered as the last data collection transistor 213_x shown in the figure), wherein the first data collection transistor 213_1 is assigned to the temperature sub-range 0°C-9°C, the second data collection transistor is associated with the temperature sub-range 10°C-19°C and the third data collection transistor 213_x is associated with the temperature sub-range 20°C-29°C.

In this embodiment, the reference transistor 211 is associated with a number of switches, which are controlled by the control circuit (shown in Figure 1) and are used to connect the gate terminal of the reference transistor 211 as required (as will be discussed below). In this embodiment, the following switches are associated with the reference transistor 211: i) a reference transistor gate supply switch 218_ref, which is connected between the gate terminal of the reference transistor 211 and the voltage supply terminal 201; and ii) a reference transistor measurement switch 217_ref, which is connected between the gate terminal of the reference transistor 211 and the measurement node 212.

In one or more embodiments, each data collection transistor 213_1-213_x is associated with a number of switches, which are also controlled by the control circuit and used to connect the gate terminal of each data collection transistor 213_1-213_x as required (as discussed below). In this embodiment, the following switches are associated with each data collection transistor 213_1-213_x: i) a data collection transistor gate supply switch 218_1-218_x, which is connected between the gate terminal of its associated data collection transistor 213_1-213_x and the voltage supply terminal 201; ii) a data collection transistor measurement switch 217_1-217 x, which is connected between the gate terminal of its associated data collection transistor 213_1-213_x and the measurement node 212; and iii) a data collection transistor gate reference switch 219_1-219_x, which is connected between the gate terminal of its associated data collection transistor 213_1-213_x and the reference terminal 203. The manner in which these switches can be controlled will be described in detail below.

While the magnitude of the gate-source voltage (VGS) of a data collection transistor 213_1-213_x is greater than a predetermined voltage (i.e., when the transistor is biased), the transistor degrades at a predicable rate, dependent on temperature. The predetermined voltage may be zero Volts, or it may be non-zero. The majority of this disclosure relates to negative-bias temperature instability (NBTI) as the temperature dependent degradation effect. However, as indicated below, positive-bias temperature instability (PBTI) can also be used. To experience the NBTI effect, the VGS of the transistor should be set below 0V (hence the term N for negative). So, for a p-type device, the effect is more prevalent because to activate a p-channel device the gate voltage is set below the source voltage. To get the same effect in an n-channel device, the gate voltage is set below the source voltage as well (i.e., it is turned more off).

Therefore, in this example, when a transistor has its VGS driven to less than 0V, the transistor degrades at a predictable rate (that is, the predetermined voltage is zero Volts). In examples where the predetermined voltage is non-zero, the predetermined voltage may be a proportion of a threshold voltage of the transistor.

In the data collection mode of the described embodiment, one of the data collection transistors 213_1 can be identified as an active data collection transistor, and the switches associated with the active data collection transistor can be operated such that the active data collection transistor degrades at a predicable rate. The first data collection transistor 213_1 in Figure 2 is illustrated as the active data collection transistor. As shown in the drawing, its gate terminal is connected to the reference terminal 203 by its associated data collection transistor gate reference switch 219_1 being closed, and its source is connected to the voltage supply terminal 201. In this way, the gate-source voltage (VGS) of the active data collection transistor 213_1 is the difference between ground and the supply voltage (Vsup), therefore VGS = -Vsup. In this embodiment, when a data collection transistor has its gate terminal connected to the reference terminal 203, its gate terminal is disconnected from the voltage supply terminal 201 because the data collection transistor gate supply switch 218_1 is controlled such that it is open. When one data collection transistor has a gate terminal connected to the reference terminal 203 and disconnected from the voltage supply terminal 201 (i.e., it is designated as the active data collection transistor), all other data collection transistors have their gate terminals connected to the voltage supply terminal 201 and disconnected from the reference terminal 203 (i.e., they can be considered as inactive data collection transistors).

The last data collection transistor 213_x shown in Figure 2 is an example of an inactive data collection transistor. As illustrated, its gate terminal is connected to the voltage supply terminal 201 because the data collection transistor gate supply switch 218_x is controlled such that it is closed, while the gate terminal is disconnected from the reference terminal 203 by its associated data collection transistor gate reference switch 219_x being open. As with the first data collection transistor 213_1, its source is connected to the voltage supply terminal 201. In this way, the gate-source voltage (VGS) of the active data collection transistor 213_1 is the difference between the supply voltage and the supply voltage; i.e., it is approximately zero Volts.

In this way, in the data collection mode, for each data collection transistor 213_1-213_x, only one of: its data collection transistor gate reference switch 219_1-219_x or its data collection transistor gate supply switch 218_1-218_x is closed at any one time. All of the data collection transistor measurement switches 217_1-217_x are open throughout the data collection mode such that the gate terminals of each of the data collection transistors 213_1-213_x are disconnected from the measurement node 212.

When the gate-source voltage is negative, the temperature dependent degradation effect described above is commonly referred to as negative-bias temperature instability (NBTI) and results in a change in one or more characteristics of the transistor. When the gate-source voltage is positive, the temperature dependent degradation effect described above is commonly referred to as positive-bias temperature instability (PBTI) and also results in a change in one or more characteristics of the transistor. For example, the one or more characteristics may comprise the threshold voltage for the transistor. The change in one or more characteristics of a transistor as a result of NBTI or PBTI is cumulative, which can be useful for embodiments of the present disclosure because a data collection transistor can be disconnected and reconnected, essentially 'picking up the degradation from where it left off'. For the purpose of conciseness, the following disclosure will discuss these effects only in relation to NBTI effects, but it will be understood that the techniques described within this disclosure could also be applied when considering PBTI effects.

As a result of the above-described instability, temperature data can be collected within the data collection transistors 213_1-213_x by biasing each data collection transistor (in this embodiment by connecting the gate of the relevant data collection transistor to the reference terminal 203 and disconnecting it from the voltage supply terminal 201; i.e., by designating it as the active data collection transistor) when the present temperature, as indicated by the temperature signal, falls within its associated temperature sub-range. For the avoidance of doubt, it is stated that the present temperature is a time-varying quantity which may be dependent on countless internal and external factors. Correspondingly, so too is the temperature signal.

To further explain this technique, some illustrative scenarios will be explained in relation to the example temperature profiling circuit described above; that is, the example temperature profiling circuit comprising a first data collection transistor, a second data collection transistor and a third data collection transistor, which is configured to operate within the temperature range of 0°C-29°C. When the present temperature is 16°C, a (for example, negative) bias voltage is applied to the second data collection transistor by designating it as the active data collection transistor and, for example, configuring its associated switches accordingly, because the present temperature falls within the temperature sub range 10°C-19°C, which is associated with the second transistor. When the present temperature is 21°C, a bias is applied to the third data collection transistor by designating it as the active data collection transistor, because the present temperature falls within the temperature sub range 20°C-29°C, which is associated with the third transistor, and so on. When any data collection transistor is designated as the active data collection transistor, all other data collection transistors are designated as inactive data collection transistors.

Because the NBTI effects occur at a predictable rate, and the effects are cumulative, the change in threshold voltage for each data collection transistor can be used to estimate the length of time that each data collection transistor has spent within its associated temperature sub-range. By combining all of this temperature data, a temperature profile which is indicative of the amount of time the temperature profiling circuit has spent within each temperature sub-range is determinable. In this embodiment, the reference transistor 211 is not biased during the data collection mode. That is, the gate terminal of the reference transistor is connected to the voltage supply terminal 201 by closing the reference transistor gate supply switch 218_ref, and the gate terminal of the reference transistor 211 is not connected to the reference terminal 203. In this embodiment, there is no switch which can be used to connect the gate of the reference transistor to the reference terminal. The reference transistor measurement switch 217_ref is open throughout the data collection mode such that the gate terminal of the reference transistor 211 is disconnected from the measurement node 212. Therefore, as will be discussed below, the reference transistor 211 can act as a control, from which the change in threshold voltage for each data collection transistor 213_1-213_x can be determined.

In this embodiment, during a data collection mode of the temperature profiling circuit, the control circuit (not shown) is configured to:
i) receive a temperature signal which is indicative of a present temperature;
ii) identify an active data collection transistor as the data collection transistor that is associated with the temperature sub-range that includes the present temperature;
iii) provide the reference voltage to the gate terminal of the active data collection transistor 213_1 (in this embodiment, by operating the switches associated with the active data collection transistor 213_1, as discussed above), such that the gate-source voltage (VGS) of the active data collection transistor 213_1 is greater than the predetermined voltage and therefore NBTI occurs;
iv) provide the supply voltage to the gate terminals of all data collection transistors apart from the active data collection transistor (in this embodiment, by operating the switches associated with the inactive data collection transistors that are described above), such that the gate-source voltage (VGS) of the inactive data collection transistor 213_x is equal to or less than the predetermined voltage and therefore NBTI does not occur; and
v) provide the supply voltage to the gate terminal of the reference transistor 211 (in this embodiment, by closing its reference transistor gate supply switch 218_ref and opening its reference transistor measurement switch 217_ref), such that a potential difference between the gate terminal and the source terminal of the reference transistor 211 is not greater than the predetermined voltage and therefore NBTI does not occur.

In this way, only one data collection transistor (the active data collection transistor 213_1) experiences NBTI effects at any one time. Meanwhile, the reference transistor does not experience any significant NBTI effects when the temperature profiling circuit is in the data collection mode. Therefore, in this embodiment, a temperature profile, which is indicative of the amount of time the temperature profiling circuit has spent within each temperature sub-range, is determinable in a temperature profile determining mode by comparing one or more characteristics of each of the plurality of the data collection transistors 213_1-213_x to those of the reference transistor 211.

In this embodiment, the temperature profiling circuit also includes a measurement-switch 214 (shown as SW_meas in Figure 2) connected between the measurement node 212 and a measurement pin 215. During the data collection mode of the profiling circuit, the control circuit is configured to open the measurement-switch 214. In this way, there is a high impedance between: i) the measurement node 212; and ii) each of the data collection transistors 213_1-213_x and the reference transistor 211, such that the measurement node 212 is disconnected from each of the transistors.

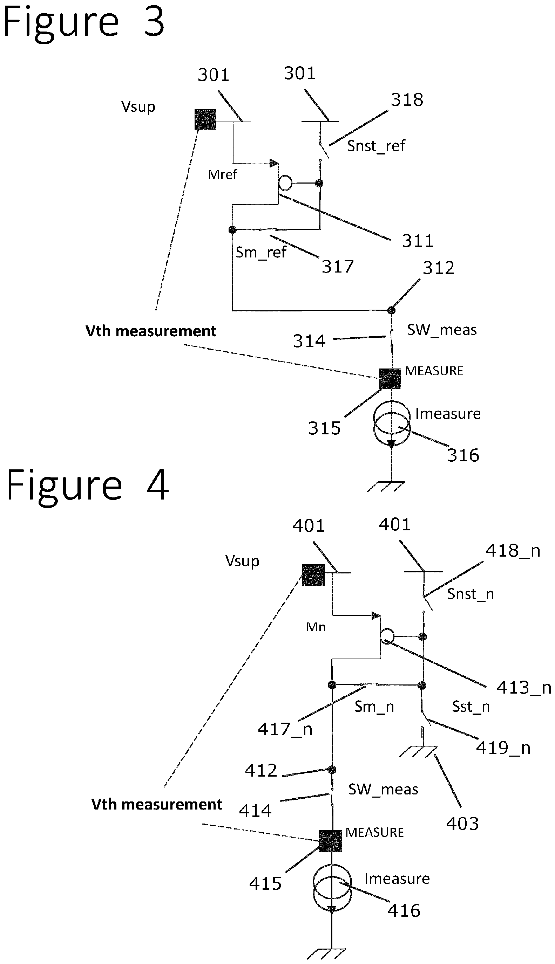

Figures 3 and 4 illustrate the operation of the data collection circuit 210 of Figure 2 when it is in the temperature profile determining mode. Features of Figures 3 and 4 that are also illustrated in Figure 1 and / or 2 are given corresponding reference numbers in the 300 and 400 series respectively. Figure 3 shows the configuration of the reference transistor 311 during the temperature profiling mode, and Figure 4 shows the configuration of a data collection transistor 413_n during the temperature profiling mode.

First, with reference to Figure 3, the reference transistor 311 is identical to each of the data collection transistors 313_1-313_x. Therefore, all of the transistors initially have the same threshold voltage. In this embodiment, the reference transistor 311 is a MOSFET, and the data collection transistors 313_1-313_x are MOSFETS. In this embodiment, the reference transistor 311 is a P-type MOSFET, and the data collection transistors 313_1-313_x are P-type MOSFETS.

In this embodiment, during the temperature profile determining mode of the temperature profiling circuit, the control circuit is configured to: close the reference transistor measurement switch 317 such that the gate and the drain of the reference transistor 311 are connected to the measurement node 312; and close the measurement-switch 314 such that the measurement node 312 is connected to the measurement pin 315. The gate terminal of the reference transistor 311 is also disconnected from the voltage supply terminal 301 by opening the reference transistor gate supply switch 318. When the gate terminal of the reference transistor 311 is connected to the measurement node in this way, the switches associated with each of the data collection transistors are operated such that they don't significantly influence the voltage at the measurement pin 315. In this example, this involves the gate terminals of each of the data collection transistors being disconnected from the measurement node 312 by opening each data collection transistor measurement switch. Also, the gate terminal of each of the data collection transistors is connected to the voltage supply terminal 301 and disconnected from the reference terminal by opening its data collection transistor gate reference switch and closing its data collection transistor gate supply switch, such that no further NBTI effects are developed within the data collection transistors during the temperature profile determining mode.

The reference transistor 311 can then be connected to the measurement pin 315 such that the one or more characteristics of the reference transistor 311 can be measured. The one or more characteristics of the reference transistor 311 in this example comprise the threshold voltage, which can be measured by applying a test current 316 to the measurement pin 315 and subtracting the voltage at the measurement pin 315 from the supply voltage (as shown by the label 'Vth measurement' in Figure 3). In some examples an absolute voltage can be measured at the measurement pin 315, which can then be used to determine one or more characteristics of the data collection transistors relative to the reference transistor 311. For the reference transistor 311, this measured threshold voltage will be used as a reference threshold voltage (which could also be referred to as a baseline threshold voltage) because it represents the threshold voltage a transistor which has had a gate-source voltage below the predetermined voltage (in this example, a gate-source voltage of zero Volts) during its entire lifetime.

We will now turn to Figure 4, which will be used to describe how the control circuit is configured to, for each data collection transistor individually in turn: close the data collection transistor measurement switch 417_n such that the gate and the drain of the data collection transistor 413_n are connected to the measurement node 412; and close the measurement-switch 414 such that the measurement node 412 is connected to the measurement pin 415. The gate terminal of the data collection transistor 413_n is also disconnected from both the voltage supply terminal 401 and the reference terminal 403 by opening the data collection transistor gate supply switch 418 and the data collection transistor gate reference switch 419.

When the gate terminal of one of the data collection transistors 413_n is connected to the measurement node 412 in this way, the switches associated with each of the other data collection transistors and the switches associated with the reference transistor are operated such that they don't significantly influence the voltage at the measurement pin 415. In this example, this involves the gate terminal of the reference transistor and the gate terminals of each other data collection transistor being disconnected from the measurement node 412, by opening each other data collection transistor measurement switch and opening the reference transistor measurement switch, therefore the reference transistor and the other data collection transistors do not interfere with the measurements made for the data collection transistor 413_n in question. The gate terminal of each of the other data collection transistors is connected to the voltage supply terminal 401 and disconnected from the reference terminal 403 by opening its data collection transistor gate reference switch and closing its data collection transistor gate supply switch, such that no further NBTI effects are developed within the data collection transistors during the temperature profile determining mode. The gate terminal of the reference transistor is also connected to the voltage supply terminal 401 by closing its reference transistor gate supply switch for the same reason.

In the temperature profile determining mode of the temperature profiling circuit, the control circuit can then be connected to the measurement pin 415 to measure the one or more characteristics of the data collection transistor 413_n in question. The one or more characteristics of each data collection transistor 413_n may comprise the threshold voltage, and this may be measured by applying a test current 416 to the measurement pin 415 and subtracting the voltage at the measurement pin 415 from the supply voltage (as shown by the label 'Vth measurement' in Figure 4) to provide a threshold voltage measurement of the data collection transistor 413_n. In some examples, an absolute voltage can be measured at the measurement pin 415 for each data collection transistor 413_n. The control circuit can then calculate the difference between the absolute voltage measured for the data collection transistor 413_n in question and the absolute voltage measured for the reference transistor, such that the magnitude of the difference represents a threshold voltage shift of the data collection transistor 413_n in question. The above-described process for measuring the one or more characteristics of a data collection transistor 413_n is repeated for each data collection transistor, until the one or more characteristics have been measured for all of the data collection transistors. As is clear, in this embodiment, only one of: the reference transistor measurement switch and the data collection transistor measurement switches 417_n is closed at any one time.

After the one or more characteristics of all of the transistors (that is, the reference transistor and each of the data collection transistors) have been measured, the control circuit is configured to compare the one or more characteristics of each of the plurality of the data collection transistors to those of the reference transistor.

In this embodiment, wherein the one or more characteristics comprises the threshold voltage, comparing the threshold voltage of each of the plurality of data collection transistors to those of the reference transistor provides a change of threshold voltage value (ΔVth) for each data collection transistor.

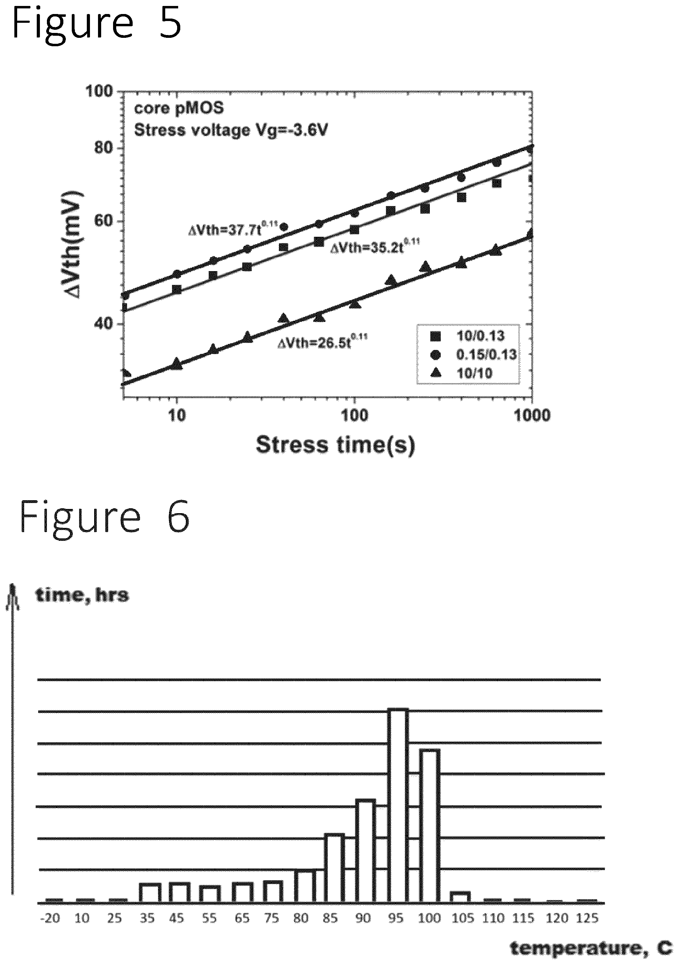

Figure 5 shows an example plot produced from a data set. The data set may comprise data representative of the change of threshold voltage per unit time a transistor spends with a gate-source voltage greater than the predetermined voltage. In some embodiments, the transistor used to provide the data set is similar or identical to the reference transistor and the data collection transistors. The data set may also represent the change of threshold voltage per unit time a transistor spends with a gate-source voltage greater than the predetermined voltage, for each temperature sub-range. During or following the temperature profiling mode of the temperature profiling circuit, a control circuit (which may or may not be the same as the control circuit that controls the data collection circuit) can calculate a time-spent value for each data collection transistor based on its determined change of threshold voltage value (ΔVth). This can be done, for example, by comparing its change of threshold voltage value to a data set, such as the one shown in Figure 5. The data set can provide a correlation between time-spent values and change of threshold voltage values (ΔVth). Although a plot is shown, the data set can be implemented as any other suitable data storage format, for example a look-up table, a list or a database. Alternatively, the correlation can be implemented as a mathematical equation. The time-spent value for each data collection transistor is indicative of the total amount of time the temperature profiling circuit has spent within the temperature sub-range which is associated with the data collection transistor in question, during the data collection mode. The control circuit can then compile all of the calculated time-spent values into a temperature profile.

The data set plot shown in Figure 5 illustrates an example of NBTI stress-induced threshold voltage shift as a function of stress time for core P-type MOSFETs with different dimensions. In this example, the data collection and reference transistors may not be identical to each other, and so it is beneficial that the data set has been produced, taking this into account. The data set may additionally or alternatively include data representative of any other suitable factors. In the example plot of Figure 5, the threshold voltages are absolute values.

To illustrate how such a data set could be used, an example is provided in keeping with previous illustrative examples described above (that is, the example temperature profiling circuit comprising a first data collection transistor, a second data collection transistor and a third data collection transistor, which is configured to operate within the temperature range of 0°C-29°C): in this example, three calibration transistors, which are similar to the data collection transistors, are used to provide the data set. Each of the calibration transistors is assigned to a temperature sub-range, in the same way as the data collection transistors. The data set is created by measuring the change of threshold voltage per unit time that the relevant calibration transistor spends with a gate-source voltage above the predetermined voltage, within its assigned temperature sub-ranges (one of 0°C-9°C, 10°C-19°C and 20°C-29°C). In this way, a data set representative of each temperature sub-range is created. In this example, the time-spent value for the first data collection transistor is calculated by comparing its change of threshold voltage to data from the data set representative of the 0°C-9°C temperature sub-range, the time-spent value for the second data collection transistor is calculated by comparing its change of threshold voltage to data from the data set representative of the 10°C-19°C temperature sub-range, and the time-spent value for the third data collection transistor is calculated by comparing its change of threshold voltage to data from the data set representative of the 20°C-29°C temperature sub-range. By calculating the time-spent value for each data collection transistor by using data from the data set which is representative of the change of threshold voltage per unit time a transistor spends with a gate-source voltage greater than its threshold voltage, within the same temperature sub-range that the data collection transistor in question was assigned to (and therefore, the temperature sub-range within which the data collection spent an amount of time with a gate-source voltage above the predetermined voltage), the time-spent value for that data collection transistor can be more accurately calculated.

Figure 6 shows an example temperature profile according to an embodiment of the present disclosure. In this example, the temperature range is -20°C to +125°C, and each temperature sub-range has a width of 5°C. From this temperature profile, it is readily apparent that the temperature profiling circuit has spent that majority of the data collection mode at approximately 95°C. As described above, this information may be useful for a number of reasons.

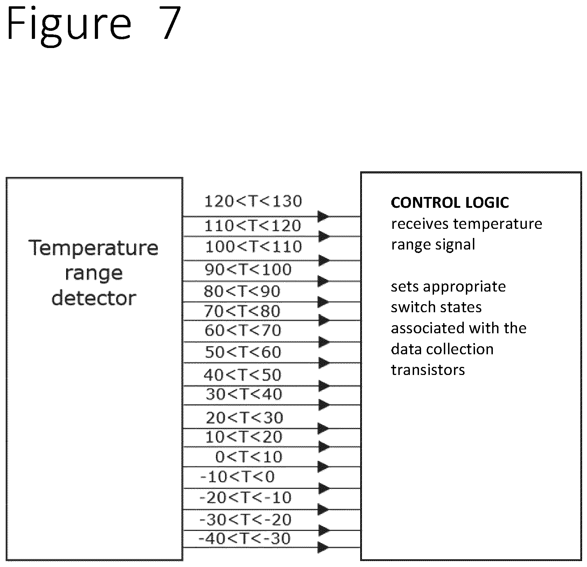

Figure 7 shows an example temperature range detector. In some embodiments, the temperature profiling circuit also includes a temperature range detector, configured to provide the temperature signal to the control circuit.

In some embodiments, the temperature range detector is implemented with a complementary to absolute temperature (CTAT) type of circuit, such as a string of diodes, along with window comparators. In other embodiments, any other suitable temperature range detector implementation may be used.

In some embodiments, the reference voltage is less positive than the supply voltage. In some embodiments the supply voltage is positive, and the reference voltage is zero Volts. In this way, the transistors can be negatively biased in order to induce NBTI effects whilst they are active.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A temperature profiling circuit configured to operate within a temperature range, comprising:
a voltage supply terminal configured to provide a supply voltage;
a data collection circuit comprising:
a reference transistor, comprising a gate terminal and a channel between a source terminal and a drain terminal, wherein the channel is connected between the voltage supply terminal and a measurement node;
a plurality of data collection transistors, each comprising a gate terminal and a channel between a source terminal and a drain terminal, wherein the channel of each reference transistor is connected between the voltage supply terminal and a measurement node, wherein: each data collection transistor of the plurality of data collection transistors is associated with a different temperature sub-range of the temperature range; and
a control circuit, configured to, during a data collection mode of the temperature profiling circuit:
receive a temperature signal which is indicative of a present temperature;
identify an active data collection transistor as the data collection transistor that is associated with the temperature sub-range that includes the present temperature;
provide a reference voltage to the gate terminal of the active data collection transistor, such that a potential difference between the gate terminal and the source terminal of the active data collection transistor is greater than a predetermined voltage;
provide the supply voltage to the gate terminals of all data collection transistors apart from the active data collection transistor such that a potential difference between the gate terminal and the source terminal of each of the other data collection transistors is not greater than the predetermined voltage; and
provide the supply voltage to the gate terminal of the reference transistor such that a potential difference between the gate terminal and the source terminal of the reference transistor is not greater than the predetermined voltage;
such that a temperature profile, which is indicative of the amount of time the temperature profiling circuit has spent within each temperature sub-range, is determinable in a temperature profile determining mode by comparing one or more characteristics of each of the plurality of the data collection transistors to those of the reference transistor.

2. The temperature profiling circuit of claim 1, further comprising a reference terminal configured to provide the reference voltage, wherein, during the data collection mode of the temperature profiling circuit, the control circuit is configured to:
connect the gate terminal of the active data collection transistor to the reference terminal,
disconnect the gate terminals of all data collection transistors apart from the active data collection transistor from the reference terminal, and
disconnect the gate terminal of the reference transistor from the reference terminal.

3. The temperature profiling circuit of claim 1 or claim 2, wherein the reference transistor is identical to each of the data collection transistors.

4. The temperature profiling circuit of any preceding claim, wherein the reference transistor is a MOSFET, and the data collection transistors are MOSFETs.

5. The temperature profiling circuit claim 4, wherein the reference transistor is a P-type MOSFET, and the data collection transistors are P-type MOSFETs.

6. The temperature profiling circuit of any preceding claim, further comprising a temperature range detector configured to provide the temperature signal to the control circuit.

7. The temperature profiling circuit of any preceding claim, wherein the data collection transistors degrade at a predictable rate while their gate terminals are connected to the reference terminal.

8. The temperature profiling circuit of any preceding claim, further comprising a measurement-switch connected between the measurement node and a measurement pin, wherein:
the control circuit is configured to, during the data collection mode of the temperature profiling circuit: open the measurement-switch; and
the control circuit is configured to, during the temperature profile determining mode of the temperature profiling circuit:
close the measurement-switch;
measure the one or more characteristics of the reference transistor by connecting the gate terminal of the reference transistor to the measurement node, wherein: when the gate terminal of the reference transistor is connected to the measurement node, the gate terminals of each of the data collection transistors are disconnected from the measurement node;
measure the one or more characteristics of each data collection transistor by connecting the gate terminal of each data collection transistor to the measurement node, wherein: when the gate terminal of each data collection transistor is connected to the measurement node, the gate terminal of the reference transistor and the gate terminals of each other data collection transistor are disconnected from the measurement node; and
compare the one or more characteristics of each of the plurality of the data collection transistors to those of the reference transistor in order to determine the temperature profile.

9. The temperature profiling circuit of claim 8, wherein the one or more characteristics comprises the threshold voltage.

10. The temperature profiling circuit of claim 9, wherein:
during the temperature profiling mode of the temperature profiling circuit, the control circuit is further configured to:
determine a change of threshold voltage value for each data collection transistor by determining the difference between the determined threshold voltage of each of the plurality of data collection transistors and that of the reference transistor, and
calculate a time-spent value for each data collection transistor from its change of threshold voltage value by comparing the change of threshold voltage value to a data set, wherein:
the data set comprises data representative of the change of threshold voltage per unit time in which a transistor spends with its gate connected to the reference terminal, and
the time-spent value for each data collection transistor is indicative of the total amount of time in which the temperature profiling circuit spent within the temperature sub-range associated with the data collection transistor, during the data collection mode; and
compile each time-spent value into the temperature profile.

11. The temperature profiling circuit of claim 10, wherein the data set comprises data representative of the change of threshold voltage per unit time in which a transistor spends with its gate connected to the reference terminal, for each temperature sub-range.

12. The temperature profiling circuit of any preceding claim, wherein the reference voltage is less positive than the supply voltage.

13. The temperature profiling circuit of any preceding claim, wherein the supply voltage is positive, and the reference voltage is zero Volts.

14. A method for determining a temperature profile of a temperature profiling circuit, within a temperature range, wherein the temperature profiling circuit comprises:
a voltage supply terminal configured to provide a supply voltage;
a reference terminal configured to provide a reference voltage;
a data collection circuit comprising:
a reference transistor comprising a gate terminal and a channel between a source terminal and a drain terminal, wherein the channel is connected between the voltage supply terminal and a measurement node;
a plurality of data collection transistors, each comprising a gate terminal and a channel between a source terminal and a drain terminal, wherein the channel is connected between the voltage supply terminal and a measurement node;
the method comprising:
associating each data collection transistor of the plurality of data collection transistors with a different temperature sub-range of the temperature range;
during a data collection mode of the temperature profiling circuit:
receiving a temperature signal which is indicative of a present temperature;
identifying an active data collection transistor as the data collection transistor that is associated with the temperature sub-range that includes the present temperature;
connecting the gate terminal of the active data collection transistor to the reference terminal,
disconnecting the gate terminals of all data collection transistors apart from the active data collection transistor from the reference terminal, and
disconnecting the gate terminal of the reference transistor from the reference terminal; and
during a temperature profile determining mode:
comparing one or more characteristics of each of the plurality of the data collection transistors to those of the reference transistor to determine a temperature profile, which is indicative of the amount of time the temperature profiling circuit has spent within each temperature sub-range.
